# EUROPEAN PATENT APPLICATION

(11) **EP 4 843 875 A1**
(43) Date of publication of application: **25.11.2026**
(21) Application number: 25741841.8
(22) Date of filing: 08.01.2025
(51) Int. Cl.: B62J 45/00, B62J 6/16, B62J 50/22, B62K 23/02, G06F 3/0482

(54) **STRADDLED VEHICLE SYSTEM, CONTROL METHOD, AND APPLICATION PROGRAM**

(30) Priority: 19.01.2024 JP 2024006710
(71) Applicant: Yamaha Hatsudoki Kabushiki Kaisha, Iwata-shi, Shizuoka 438-8501 (JP)
(72) Inventor: NOGI, Etsuji, Iwata-shi, Shizuoka 438-8501 (JP); YAMADA, Muneyuki, Iwata-shi, Shizuoka 438-8501 (JP)
(74) Representative: Stöckeler, Ferdinand
(86) International application number: PCT/JP2025/000281
(87) International publication number: WO 2025/154597

(57) **Abstract**

A straddled vehicle system is provided in which the configuration for reflecting the traveling state in the display of an image is simple, and requests for changes in conditions of reflection or a content of the display can be flexibly addressed. The straddled vehicle system includes a straddled vehicle and an application program operating on a mobile information terminal capable of communicating with the straddled vehicle. The straddled vehicle includes a vehicle body, a handlebar switch, a vehicle image display device, and a vehicle image control device, and the mobile information terminal includes a terminal control device. The application program, by being executed in the terminal control device, causes the terminal control device to select the display image from the plurality of images and transmit the image data of the display image, when a selection command based on the operation on the handlebar switch is received from the vehicle image control device, and causes the terminal control device to transmit, instead of the image data of the display image, restriction image data of a restriction image representing that a selection operation with respect to the handlebar switch is disabled, and to stop selection of the display image in response to reception of the selection command, when traveling of the straddled vehicle is detected.

## Description

### Technical Field

The present teaching relates to a straddled vehicle system, a control method, and an application program.

### Background Art

Patent Document 1 shows a motorcycle display device mounted on a motorcycle which is a straddled vehicle. Such a motorcycle display device includes an operation unit provided on the handle, a display unit that serves also as a speed display unit, and a processing device. The processing device generates image information based on communication with an external device. Further, the processing device detects a driving state of the motorcycle and outputs an image to the display unit based on the driving state detected.

### Citation List

### Patent Literature

[Patent Document 1] Japanese Patent Application Laid-Open No. 2022-018014

### Summary of Invention

### Technical Problem

In a system that displays images sent from a mobile information terminal on a speed display unit of a straddled vehicle, there may be a case in which it is desirable that a configuration for reflecting a traveling state in display of the images in the straddled vehicle is simple and can flexibly respond to a request for a change in conditions of reflecting or a content of display.

An object of the present teaching is to provide a straddled vehicle system, a control method, and an application program, each having a simple configuration for reflecting a traveling state in a display of images in a straddled vehicle and being capable of flexibly responding to a request for a change in conditions of reflecting or a content of the display.

### Solution to Problem

For example, a motorcycle in Patent Document 1 is equipped with a manual operation unit. An external device selects an image to be displayed according to an operation of the manual operation unit and transmits the image to a motorcycle display device. The image transmitted from the external device is displayed in a part of a display unit that displays a speed of the vehicle. Also, in the motorcycle display device, a traveling state of the motorcycle is detected. The motorcycle display device selects and displays a specific image based on the traveling state detected.

As in the above-described example, in a system that displays images transmitted from an external mobile information terminal on a display device attached to a straddled vehicle, there may be a request to change content of a specific image displayed based on a traveling state, and there may be, for example, a request to change conditions under which a specific image is displayed. Such changes are addressed by changes in hardware or software such as a display device that displays a speed or a control device thereof. However, such changes correspond to a change in a part of functions or a structure of a vehicle and may not be easily implemented. For example, even in a case in which it is possible to address a change in software, the straddled vehicle is required to be brought to a vehicle repair shop or a vehicle parts dealer and to undergo modification work. Further, at a time of designing a straddled vehicle, a method is conceivable in which all possible variations of images and variations of display conditions are stored in a control device of a display device, a list of the variations is displayed on a display unit, and selection is allowed by an operation of a handlebar switch. However, with this method, it is not possible to address a change outside a scope that can be anticipated in the future, and even in a case in which it is possible to address by variations, a selection operation from the variations becomes complex for a handlebar switch that is operated while a handlebar is held.

The present inventors considered deliberately centralizing final selection means of an image to be displayed in a mobile information terminal. In this case, image data of a specific image displayed based on a particular traveling state is included in the mobile information terminal and becomes one of candidates of images transmitted from the mobile information terminal. The specific image is selected on the mobile information terminal and sent to the straddled vehicle. A restriction image indicating that a selection operation on a handlebar switch is disabled is also selected in a mobile information terminal based on detection of traveling in the mobile information terminal and transmitted to the straddled vehicle. According to this configuration, in a straddled vehicle, for example, it is possible to omit means that stores this specific image and means that selects display of the specific image. Therefore, in the straddled vehicle, it is possible to address display of a specific image by simply having a function that displays images received from a mobile information terminal.

Since the function of selecting images is centralized in a mobile information terminal, it is possible to address, by an update of software of the mobile information terminal, a request such as a change in content of a specific image or a change in conditions under which a specific image is displayed. For example, by downloading data of a specific image to the mobile information terminal or by downloading an application program that generates image data on the mobile information terminal, it is possible to change a display function of a specific image while omitting a change in functions or a structure involving modification work of the straddled vehicle and suppressing a complex operation on the handlebar switch.

Therefore, a configuration for reflecting a traveling state in a display of an image is simple, and requests for changes in conditions of reflecting or a content of the display can be flexibly addressed. Based on this finding, the present teaching was completed.

The present teaching can provide a straddled vehicle system as described below.
(1) A straddled vehicle system including a straddled vehicle and an application program operating on a mobile information terminal capable of communicating with the straddled vehicle,
   the straddled vehicle comprising:
   a vehicle body including a handlebar held by a hand of a rider of the straddled vehicle;
   a handlebar switch attached to the handlebar;
   a speed display unit attached to the vehicle body, which displays a traveling speed of the straddled vehicle and an image; and
   a vehicle image control device having a function to communicate with the mobile information terminal and controlling the speed display unit,
   the mobile information terminal comprising:
      a terminal control device as a computer having a function to communicate with the vehicle image control device,
      wherein the vehicle image control device
      transmits, to the terminal control device, a selection command to cause the terminal control device to select one image as a display image from a plurality of images, in response to an operation on the handlebar switch by a hand of the rider while the rider holds the handlebar,
      when image data is received from the terminal control device, causes the speed display unit to display an image of the image data thereon, and
      wherein the application program, by being executed in the terminal control device,
      causes the terminal control device to select the display image from the plurality of images and transmit the image data of the display image, when the selection command based on the operation on the handlebar switch is received from the vehicle image control device, and
      causes the terminal control device to transmit, instead of the image data of the display image, restriction image data of a restriction image representing that a selection operation with respect to the handlebar switch is disabled, and to stop selection of the display image in response to reception of the selection command based on the operation on the handlebar switch, when traveling of the straddled vehicle is detected.

According to the straddled vehicle system of (1) above, the vehicle image control device transmits, to the terminal control device, a selection command to cause the terminal control device to select one image as a display image from a plurality of images, in response to an operation on the handlebar switch by a hand of the rider while the rider holds the handlebar.

The terminal control device executing the application program selects the display image from the plurality of images and transmits image data of the display image, when the selection command is received.

When image data is received from the terminal control device, the vehicle image control device causes the speed display unit to display an image of the image data thereon.

When the terminal control device executing the application program detects traveling of the vehicle, the terminal control device transmits, instead of the image data of the display image, restriction image data representing a restriction image. The restriction image is an image that indicates that a selection operation with respect to the handlebar switch is disabled. Further, when the terminal control device detects a traveling state of the vehicle, the terminal control device stops selection of the display image in response to reception of the selection command based on the operation on the handlebar switch.

According to this straddled vehicle system, final selection means for image data of the display image is centralized in the mobile information terminal. In other words, restriction image data of the restriction image, which is selected and displayed while the straddled vehicle is traveling, is included in the mobile information terminal. The restriction image is treated as one type of image transmitted from the mobile information terminal. The restriction image is selected by the mobile information terminal while the straddled vehicle is traveling, and is transmitted to the straddled vehicle. Therefore, in the straddled vehicle, for example, it is possible to omit the means of storing the restriction image and selecting the display of the restriction image. The straddled vehicle can address display of the restriction image by simply having a function that displays an image received from the mobile information terminal.

Since the function of selecting images is centralized in the mobile information terminal, it is possible to address, for example, by an update of software of the mobile information terminal, a request such as a change in content of the restriction image or a change in conditions under which the restriction image is displayed. Therefore, it is possible to suppress a change in functions or a structure involving modification work of the straddled vehicle, and to change a display form of the restriction image while suppressing a complex menu selection operation with respect to the handlebar switch.

Therefore, a configuration for reflecting a traveling state in display of an image is simple, and requests for changes in conditions of reflecting or a content of the display can be flexibly addressed.

The straddled vehicle is a vehicle including a saddle-type seat. The straddled vehicle is a vehicle configured so that a rider rides in a state of straddling a seat. The straddled vehicle is not limited to a scooter-type, moped-type, off-road-type, or on-road-type motorcycle, and includes a snowmobile, a watercraft, an all-terrain vehicle (ATV), and the like. The straddled vehicle may include at least one front wheel and at least one rear wheel. The straddled vehicle is not limited to a motorcycle, and may be a motor tricycle in which a front wheel or a rear wheel is composed of a pair of left and right wheels, or may be a four-wheel vehicle in which a front wheel and a rear wheel are each composed of a pair of left and right wheels. The straddled vehicle may be configured to be capable of turning in a lean posture leaned toward a center of a curve.

The mobile information terminal is an information terminal that can be carried by a rider. The mobile information terminal has a size that can be carried by a rider. The mobile information terminal is, for example, a smartphone. However, the mobile information terminal is not particularly limited, and may be, for example, a tablet-type computer or a wearable terminal. Further, when the rider rides on the straddled vehicle, the mobile information terminal may be detachably attached to the vehicle body.

The mobile information terminal may, for example, include a terminal operation device. The terminal operation device is, for example, a touch screen. The touch screen has a display that displays an image and a translucent touch panel overlaid on the display. However, a structure of the terminal operation device is not particularly limited, and may be, for example, a display that displays an image and a switch provided at a location separate from the display.

The speed display unit is, for example, a speedometer that displays a traveling speed of the straddled vehicle. The speed display unit has, for example, a region that displays a numerical value of the traveling speed and a region that displays an image of image data received from the terminal control device. In this case, the speed display unit may have, for example, a region that displays the numerical value of the traveling speed as an image and a region that displays an image of image data received from the terminal control device. Further, the speed display unit may display, for example, information other than the numerical value of the traveling speed and the image of the received image data. The speed display unit is, for example, attached to the handlebar. However, an attachment position of the speed display unit is not particularly limited, and for example, the speed display unit may be attached to the vehicle body other than the handlebar. The speed display unit displays, for example, a still image. More specifically, the speed display unit may have, for example, a function to display only a still image. In this case, a configuration of the speed display unit can be simplified, and updating of the display image can be completed by intermittent communication corresponding to a single image. However, a display function of the speed display unit is not particularly limited. For example, the speed display unit may be capable of displaying a moving image.

The vehicle image control device has, for example, a function to control display of the numerical value of the traveling speed on the speed display unit. The vehicle image control device is attached to the straddled vehicle. The vehicle image control device is, for example, provided integrally with the speed display unit. For example, the vehicle image control device directly detects the traveling speed of the straddled vehicle from the straddled vehicle, and causes the speed display unit to display the numerical value of the traveling speed. However, the vehicle image control device is not particularly limited, and for example, may not control the display of the numerical value of the traveling speed, but control display of an image received from the terminal control device. Further, the vehicle image control device may, for example, control a display other than the numerical value of the traveling speed.

The restriction image is, for example, an image indicating, by characters or pictograms, that a selection operation with respect to the handlebar switch is disabled. The restriction image is not particularly limited, and may include, for example, characters or figures indicating that the vehicle is traveling, and may be a plain image including neither characters nor figures.

The image data of an image is, specifically, image data representing the image. A format of the image data may be, for example, a bitmap format, or may be a compressed format. The restriction image data is one type of image data. The restriction image data differs from other image data in content representing the restriction image. The restriction image data has, for example, the same data format as other image data.

Detection of traveling of the straddled vehicle is not limited to strictly determining whether or not the traveling speed is zero. For example, traveling of the straddled vehicle can be detected by the fact that a time during which the traveling speed exceeds a reference speed has exceeded a reference time, in order to suppress a frequent change in display. The traveling speed can be directly obtained from the straddled vehicle. However, a method of obtaining the traveling speed is not particularly limited, and the traveling speed may be, for example, indirectly detected as a moving speed of the terminal control device. A non-traveling state of the straddled vehicle is a state in which traveling of the straddled vehicle is not detected.

The application program is a program executed by the terminal control device as a computer. The application program is, for example, a program that is connected to the vehicle image control device mounted on the straddled vehicle so as to be capable of wireless communication, and that transmits image data to and obtains image data from the vehicle image control device. The application program is, for example, referred to as a connected application in some cases. The application program is different from an operating system (OS) having minimum functions for operating the mobile information terminal as a computer. For example, the terminal control device executing the OS downloads and installs the application program via the Internet. In this way, the terminal control device executes the application program.

(2) The straddled vehicle system according to (1), such that
the application program, by being executed in the terminal control device,
causes the terminal control device to set, for a predetermined image among images displayable on the speed display unit, a display retention attribute to keep a display state, and
causes the terminal control device to omit transmission of the restriction image data of the restriction image, when the image data transmitted to the vehicle image control device has the display retention attribute.

According to the straddled vehicle system of (2) above, when the image data previously transmitted to the vehicle image control device has the display retention attribute, that is, when an image with the display retention attribute set is being displayed, the restriction image is not transmitted from the terminal control device even if traveling of the straddled vehicle is detected. Therefore, even when the vehicle is in the traveling state, display of the image with the display retention attribute set is kept as is. For example, by setting the display retention attribute for an image that should not disappear even when the straddled vehicle travels, such as vehicle maintenance information indicating that maintenance is required for the straddled vehicle, the restriction image is not displayed even when traveling starts while the image is being displayed, and display of the vehicle maintenance information is kept. Setting of an exceptional condition under which display of the restriction image does not start even in the traveling state can be executed, for example, by an operation on the mobile information terminal or by the application program of the mobile information terminal. In other words, it is possible to change exceptions of display of the restriction image while suppressing a change in functions or a structure of the straddled vehicle or suppressing a complex operation on the handlebar switch. Therefore, it is possible to flexibly address setting of exceptions of display of the restriction image.

A type of image for which the display retention attribute is set is not particularly limited, and may be one related to information with a degree of urgency such that the information should not disappear merely because the straddled vehicle has traveled. The type of image for which the display retention attribute is set may be, for example, one related to a state of traveling or an environment of traveling. The type of image for which the display retention attribute is set may be, for example, weather information or earthquake information.

(3) The straddled vehicle system according to (1) or (2), such that
the application program, by being executed in the terminal control device,
causes the terminal control device to
transmit the image data of the display image, when a non-traveling state of the straddled vehicle is detected, and
resume selection of the display image when the selection command based on the operation on the handlebar switch is received from the vehicle image control device.

According to the straddled vehicle system of (3), when the straddled vehicle is in the non-traveling state, the display of the restriction image is canceled, and selection and display of the display image become possible. Therefore, conditions for canceling the display of the restriction image can also be flexibly addressed.

(4) A control method of controlling a display in a vehicle image display device attached to a vehicle body of a straddled vehicle, by using a mobile information terminal having a terminal control device capable of communicating with the straddled vehicle, the method comprising:
transmitting, to the terminal control device, a selection command to cause the terminal control device to select one image as a display image from a plurality of images, in response to an operation on a handlebar switch by a hand of a rider while the rider holds a handlebar attached to the vehicle body;
selecting the display image from the plurality of images and transmitting image data of the display image, when the selection command based on the operation on the handlebar switch is received from a vehicle image control device;
when the image data is received from the terminal control device, causing a speed display unit to display an image of the image data thereon; and
transmitting, instead of the image data of the display image, restriction image data of a restriction image representing that a selection operation with respect to the handlebar switch is disabled, and stopping selection of the display image in response to reception of the selection command based on the operation on the handlebar switch, when traveling of the vehicle is detected.

According to the above configuration, a configuration for reflecting a traveling state in display of an image is simple, and requests for changes in conditions of reflecting or a content of the display can be flexibly addressed.

The present teaching can also provide a straddled vehicle system as described below.

(5) A straddled vehicle system including a straddled vehicle and a mobile information terminal capable of communicating with the straddled vehicle,
the straddled vehicle comprising:
a vehicle body including a handlebar held by a hand of a rider of the straddled vehicle;
a handlebar switch attached to the handlebar;
a speed display unit attached to the vehicle body, which displays a traveling speed of the straddled vehicle and an image; and
a vehicle image control device having a function to communicate with the mobile information terminal and controlling the speed display unit,
the mobile information terminal comprising:
   a terminal control device as a computer having a function to communicate with the vehicle image control device,
   wherein the vehicle image control device
   transmits, to the terminal control device, a selection command to cause the terminal control device to select one image as a display image from a plurality of images, in response to an operation on the handlebar switch by a hand of the rider while the rider holds the handlebar,
   when image data is received from the terminal control device, causes the speed display unit to display an image of the image data thereon, and
   the terminal control device, by executing an application program,
   selects the display image from the plurality of images and transmits the image data of the display image, when the selection command based on the operation on the handlebar switch is received from the vehicle image control device; and
   transmits, instead of the image data of the display image, restriction image data of a restriction image representing that a selection operation with respect to the handlebar switch is disabled, and stops selection of the display image in response to reception of the selection command based on the operation on the handlebar switch, when traveling of the straddled vehicle is detected.

According to the above configuration, similarly to the above (1), a configuration for reflecting a traveling state in the display of an image is simple, and requests for changes in conditions of reflecting or a content of the display can be flexibly addressed.

(6) The straddled vehicle system according to (5), such that
the terminal control device
sets, for a predetermined image among images displayable on the speed display unit, a display retention attribute to keep a display state, and
omits transmission of the restriction image data of the restriction image, when the image data transmitted to the vehicle image control device has the display retention attribute.

According to the above configuration, similarly to the above (2), it is possible to change exceptions of the display of the restriction image while suppressing changes in functions or structures of the straddled vehicle, or suppressing complex operations on the handlebar switch. Therefore, it is possible to flexibly address setting of exceptions of display of the restriction image.

(7) The straddled vehicle system according to (5) or (6), such that
the terminal control device
transmits the image data of the display image, when a non-traveling state of the straddled vehicle is detected, and
resumes selection of the display image when the selection command based on the operation on the handlebar switch is received from the vehicle image control device.

According to the above configuration, when the straddled vehicle is in a non-traveling state, the display of the restriction image is canceled, and selection and display of the display image become possible. Therefore, conditions for canceling the display of the restriction image can also be flexibly addressed.

The present teaching can also provide an application program as described below.

(8) An application program that controls the mobile information terminal included in the straddled vehicle system according to any one of (5) to (7), such that
the application program, by being executed in the terminal control device,
causes the terminal control device to select the display image from the plurality of images and transmit the image data of the display image, when the selection command based on the operation on the handlebar switch is received from the vehicle image control device, and
causes the terminal control device to transmit, instead of the image data of the display image, restriction image data of a restriction image representing that a selection operation with respect to the handlebar switch is disabled, and to stop selection of the display image in response to reception of the selection command based on the operation on the handlebar switch, when traveling of the straddled vehicle is detected.

According to the above configuration, a configuration for reflecting a traveling state in the display of an image is simple, and requests for changes in conditions of reflecting or a content of the display can be flexibly addressed.

The terminology used herein is for defining particular embodiments only and is not intended to be limiting the teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. Further, "connected" and "coupled" are not limited to physical or mechanical connections or couplings, and may include direct or indirect electrical connections or couplings. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses many techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This Description describes a novel straddled vehicle system and a control method. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

### Effects of Invention

According to the present teaching, a configuration for reflecting a traveling state in display of an image is simple, and requests for changes in conditions of reflecting or a content of the display can be flexibly addressed.

### Brief Description of Drawings

[FIG. 1] A diagram illustrating a straddled vehicle system according to one embodiment.
[FIG. 2] A flowchart illustrating an operation of the straddled vehicle system shown in FIG. 1.
[FIG. 3] A flowchart illustrating an example of operation of the straddled vehicle system shown in FIG. 1 and FIG. 2.
[FIG. 4] A diagram illustrating an example of a display screen of a mobile information terminal.
[FIG. 5] is a table showing an example of an image and an attribute set for the image.

### Description of Embodiments

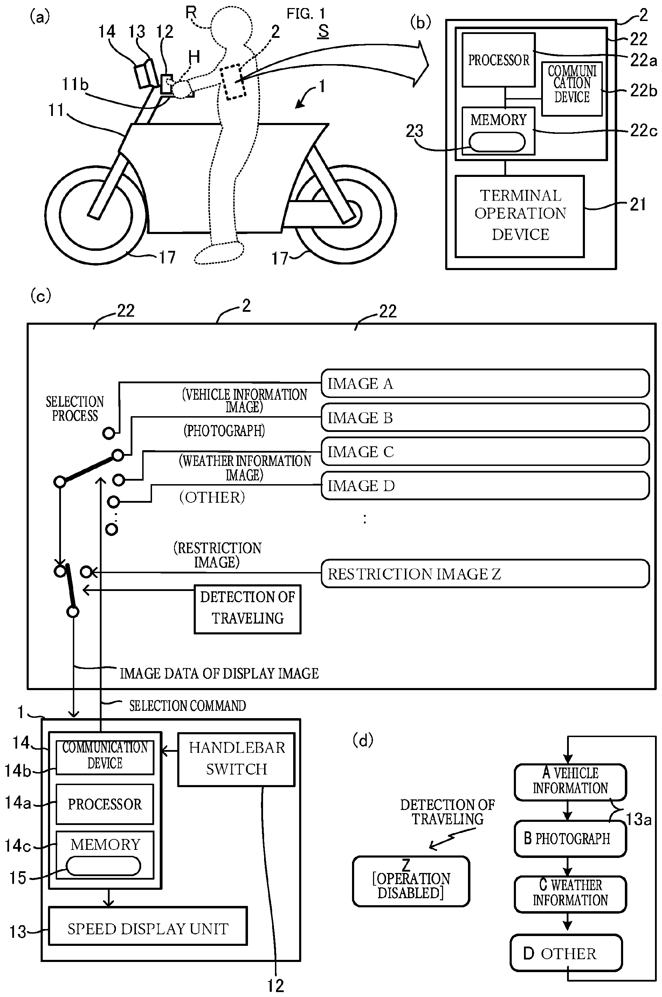

FIG. 1 is a diagram illustrating a straddled vehicle system according to one embodiment. Part (a) of FIG. 1 is an external view schematically showing the straddled vehicle system. Part (b) of FIG. 1 is a block diagram showing a configuration of the mobile information terminal. Part (c) of FIG. 1 is a block diagram illustrating an operation of the straddled vehicle system. Part (d) of FIG. 1 is a chart illustrating a transition of display in a vehicle image display device.

The straddled vehicle system S shown in FIG. 1 includes a straddled vehicle 1, a mobile information terminal 2, and an application program 23. The application program 23 operates on a mobile information terminal 2 capable of communicating with the straddled vehicle 1.

The straddled vehicle 1 includes a vehicle body 11, a handlebar switch 12, a speed display unit 13, and a vehicle image control device 14. The straddled vehicle 1 also includes wheels 17.

The vehicle body 11 supports the wheels 17. The vehicle body 11 includes a handlebar 11b. The handlebar 11b is held by hands H of a rider R of the straddled vehicle 1. The handlebar 11b of the straddled vehicle 1 is held by hands H of a rider R seated on the straddled vehicle 1, whereby the straddled vehicle 1 receives a steering operation.

The handlebar switch 12 is attached to the handlebar 11b. The handlebar switch 12 is arranged in a position where the handlebar switch 12 can be operated by a hand H of a rider R while holding the handlebar 11b. The handlebar switch 12 can be operated by a hand H of the rider R while holding the handlebar 11b.

The speed display unit 13 is attached to the vehicle body 11. The speed display unit 13 that displays the traveling speed of the straddled vehicle 1 shows an image. The speed display unit 13 displays a still image. The speed display unit 13 has, for example, a region that displays a traveling speed and a region that displays an image, the region that displays an image being different from the region that displays the traveling speed. The speed display unit 13 displays, for example, a numerical value of the traveling speed as an image. However, it is possible to adopt a configuration in which the traveling speed is displayed on the speed display unit 13 using, for example, a 7-segment display.

The vehicle image control device 14 has a function to communicate with the mobile information terminal 2. The vehicle image control device 14 can communicate with the mobile information terminal 2 via short-range wireless communication. The short-range wireless communication is, for example, Bluetooth (registered trademark) or Wi-Fi (registered trademark). The vehicle image control device 14 also controls the speed display unit 13. More specifically, the vehicle image control device 14 controls the display operation of the speed display unit 13. The vehicle image control device 14 detects the traveling speed of the straddled vehicle 1 and displays the numerical value of the traveling speed on the speed display unit 13.

The vehicle image control device 14 is a computer that controls the speed display unit 13 by executing a program 15, as shown in a lower part of part (c) of FIG. 1. The vehicle image control device 14, more specifically, includes a processor 14a, a communication device 14b that wirelessly communicates with the mobile information terminal 2, and a memory 14c that stores the program 15 and data. A function and a process of the vehicle image control device 14 are executed by the processor 14a executing the program 15.

The mobile information terminal 2 is capable of communicating with the straddled vehicle 1. The mobile information terminal 2 can also communicate via a computer network other than the straddled vehicle 1. The mobile information terminal 2 includes a terminal operation device 21 and a terminal control device 22, as shown in part (b) of FIG. 1. Specifically, the terminal control device 22 has a function of communicating with the vehicle image control device 14. The terminal control device 22 is a computer that controls the terminal control device 22 by executing the application program 23.

The terminal control device 22, more specifically, includes a processor 22a that executes the application program 23, a communication device 22b that wirelessly communicates with the vehicle image control device 14, and a memory 22c that stores the application program 23 and data. The processor 22a, by executing the application program 23 stored in the memory 22c, communicates with the vehicle image control device 14 and controls the terminal operation device 21. The application program 23 is obtained, for example, via a computer network such as the Internet. The application program 23 is distributed, for example, by the manufacturer of the straddled vehicle 1. For example, a rider R operates the mobile information terminal 2 to obtain the application program 23 and installs the application program 23 on the mobile information terminal 2, whereby the straddled vehicle system S is to be produced.

The terminal operation device 21 displays images for operations and accepts an operation related to the displayed images. The terminal operation device 21 is, for example, a touch screen.

The mobile information terminal 2 has a plurality of images A, B, C, D, .... More specifically, the mobile information terminal 2 has image data representing each of a plurality of images A, B, C, D, .... In the present embodiment, the images A, B, C, D, ... may be referred to as images A to D in the description. The mobile information terminal 2 can provide image data of images that can be displayed on the speed display unit 13. The image data is stored, for example, in the memory 22c of the mobile information terminal 2. The image data is obtained, for example, by the terminal control device 22 communicating, via a network, with a device other than the mobile information terminal 2 and other than the straddled vehicle 1. Also, for example, the image data is generated by executing application software different from the application program 23 on the terminal control device 22. Also, for example, the image data is generated by an imaging operation of a camera (not shown) that the mobile information terminal 2 has.

The image A is a vehicle information image representing vehicle information, for example, as shown in part (c) of FIG. 1. The image B is, for example, a photograph obtained through shooting. The image C is, for example, a weather information image representing a weather forecast. The image D is, for example, an image representing other information. Each of the images A, B, C, D, ... may, for example, belong to different image groups. An image group is, for example, application software. For example, the image A may be a representative image of a plurality of images output from application software as an image group that displays vehicle information.

The mobile information terminal 2 has a restriction image Z. More specifically, the mobile information terminal 2 has restriction image data representing the restriction image Z. The restriction image Z indicates, for example, that a selection operation on the handlebar switch 12 by a rider R is disabled. The restriction image Z indicates, for example, that a selection operation in response to an image selection operation is restricted. The restriction image Z may, for example, represent a message prohibiting a selection operation by the rider R. The data format for the restriction image Z is the same as the format for the images A, B, C, D, ....

Subsequently, operations of the vehicle image control device 14 and the mobile information terminal 2 will be described. The vehicle image control device 14 performs a control process by executing the program 15. Further, the terminal control device 22 of the mobile information terminal 2 performs the control process by executing the application program 23.

The vehicle image control device 14 transmits a selection command to the terminal control device 22 in response to an operation on the handlebar switch 12 by the hand H of the rider R while holding the handlebar 11b. The selection command is command data that causes the terminal control device 22 to select one image from the plurality of images A to D. One image selected from the images A to D according to the selection command is the display image.

Also, when the vehicle image control device 14 receives image data from the terminal control device 22, the vehicle image control device 14 causes the speed display unit 13 to display the image of the image data.

The terminal control device 22, by executing the application program 23, selects the display image from the plurality of images A to D when receiving a selection command based on an operation of the handlebar switch 12 from the vehicle image control device 14, and transmits image data of the display image. The terminal control device 22, for example, selects one image as the display image sequentially from the plurality of images A to D each time the selection command is received.

Note that, when each of the images A to D is an image group including a plurality of images, the terminal control device 22 transmits image data of images included in the selected image group. Then, the terminal control device 22 may, for example, in response to a command to select an individual image within an image group, sequentially select one image from the selected image group and transmit image data of the selected image.

When the terminal control device 22 detects traveling of the straddled vehicle 1, the terminal control device 22 transmits restriction image data of the restriction image Z instead of image data of the display image (one of the images A to D). Then, the terminal control device 22 stops selection of the display image in response to receiving the selection command based on the operation of the handlebar switch 12. While the straddled vehicle 1 is traveling, the restriction image Z that is not the display image selected by the rider R is displayed, so that the rider R is kept from focusing on the image.

The terminal control device 22, for example, detects traveling of the straddled vehicle 1 based on a detection result of a moving speed of the mobile information terminal 2. When the mobile information terminal 2 is carried by the rider R or is detachably attached to the vehicle body 11, the moving speed of the mobile information terminal 2 can be used for detection of traveling of the straddled vehicle 1. Since the vehicle image control device 14 attached to the vehicle body 11 receives image data from the mobile information terminal 2, the mobile information terminal 2 is likely to be carried by the rider R or to be attached to the vehicle body 11. Therefore, the moving speed of the mobile information terminal 2 is likely to reflect the traveling state of the straddled vehicle 1.

For example, the communication device 22b has a reception function of the Global Positioning System (GPS). The terminal control device 22 can detect a moving speed of the mobile information terminal 2 based on positional information of the mobile information terminal 2 obtained from the communication device 22b.

Note that, as the terminal control device 22, for example, a configuration may also be adopted in which traveling of the straddled vehicle 1 is detected by directly acquiring data on a traveling state of the straddled vehicle 1 from the straddled vehicle 1 via wireless communication with the vehicle image control device 14 controlling the speed display unit 13.

Note that, in the terminal control device 22, the restriction image Z cannot be selected in response to reception of a selection command. In other words, the restriction image Z is an image outside a selection range in response to reception of a selection command. In other words, the terminal control device 22 selects an image other than the restriction image Z in response to receiving a selection command. Therefore, a situation in which the restriction image representing inappropriate content, such as restriction of image selection, is displayed due to an operation of the handlebar switch 12 in a non-traveling state is suppressed.

In the straddled vehicle system S of the present embodiment, final selection means for image data of a display image, including the restriction image Z, is centralized in the mobile information terminal 2. In other words, restriction image data of the restriction image Z, which is selected and displayed while the straddled vehicle 1 is traveling, is one candidate of image data transmitted from the mobile information terminal 2. The restriction image Z is selected by the mobile information terminal 2 while the straddled vehicle 1 is traveling, and is transmitted to the straddled vehicle 1. Therefore, in the straddled vehicle 1, it is possible to omit the means of storing the restriction image Z and selecting the display of the restriction image Z. In other words, in the straddled vehicle 1, it is possible to address the display of the restriction image Z simply by having a function that displays image data received from the mobile information terminal 2.

Since the function of selecting images is centralized in the mobile information terminal 2, for example, it is possible to address requests such as changing content of the restriction image Z or changing conditions under which the restriction image Z is displayed by updating the application program 23 of the mobile information terminal 2. Therefore, it is possible to suppress changes in functions or structures involving modification work of the straddled vehicle 1, and to change a display form of the restriction image Z while omitting selection operation of a complex setting menu for the handlebar switch 12.

Therefore, according to the straddled vehicle system S of the present embodiment, a configuration for reflecting a traveling state in display of images A to Z is simple, and requests for changes in conditions of reflecting or content of display can be flexibly addressed.

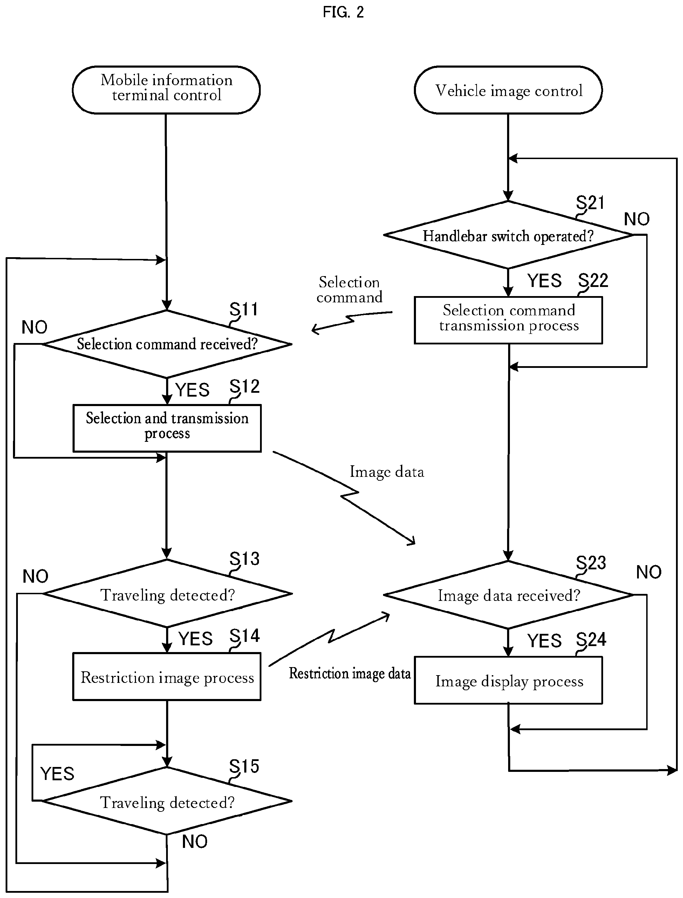

FIG. 2 is a flowchart illustrating an operation of the straddled vehicle system shown in FIG. 1. FIG. 2 shows control in the mobile information terminal 2 and control in the vehicle image control device 14.

Control in the mobile information terminal 2 is implemented by the terminal control device 22 executing the application program 23. Control in the vehicle image control device 14 is implemented by the vehicle image control device 14 executing the program 15.

The vehicle image control device 14 executes a selection command transmission process (S22) every time the handlebar switch 12 is operated (Yes at S21). The vehicle image control device 14 transmits a selection command to the terminal control device 22.

When the terminal control device 22 receives the selection command from the vehicle image control device 14 (Yes at S11), the terminal control device 22 executes a selection and transmission process (S12). The terminal control device 22 selects one image sequentially from a plurality of images (A to D) each time the selection command is received. The terminal control device 22 transmits image data of a display image to the vehicle image control device 14.

When the vehicle image control device 14 receives the image data (Yes at S23), the vehicle image control device 14 executes an image display process (S24). The vehicle image control device 14 displays a content image of the received image data on the speed display unit 13. The vehicle image control device 14 keeps the content image displayed on the speed display unit 13 until the next image data is received.

Further, when the terminal control device 22 detects traveling of the straddled vehicle 1 (Yes at S13), the terminal control device 22 executes a restriction image process (S14). The terminal control device 22 transmits restriction image data of a restriction image Z to the vehicle image control device 14. As a result, the vehicle image control device 14, also for the restriction image Z, executes the image display process (S24) when the image data is received (Yes at S23). As a result, the restriction image Z is displayed.

Further, while traveling of the straddled vehicle 1 is detected (Yes at S15), the terminal control device 22 executes neither reception of the selection command (S11) nor a selection and transmission process (S12). Then, selection of the display image in response to reception of the selection command is stopped.

As described above, the vehicle image control device 14 executes the selection command transmission process (S21, S22) and the image display process (S23, S24). The terminal control device 22 executes the selection and transmission processes (S11, S12) and the restriction image processes (S13, S14, S15).

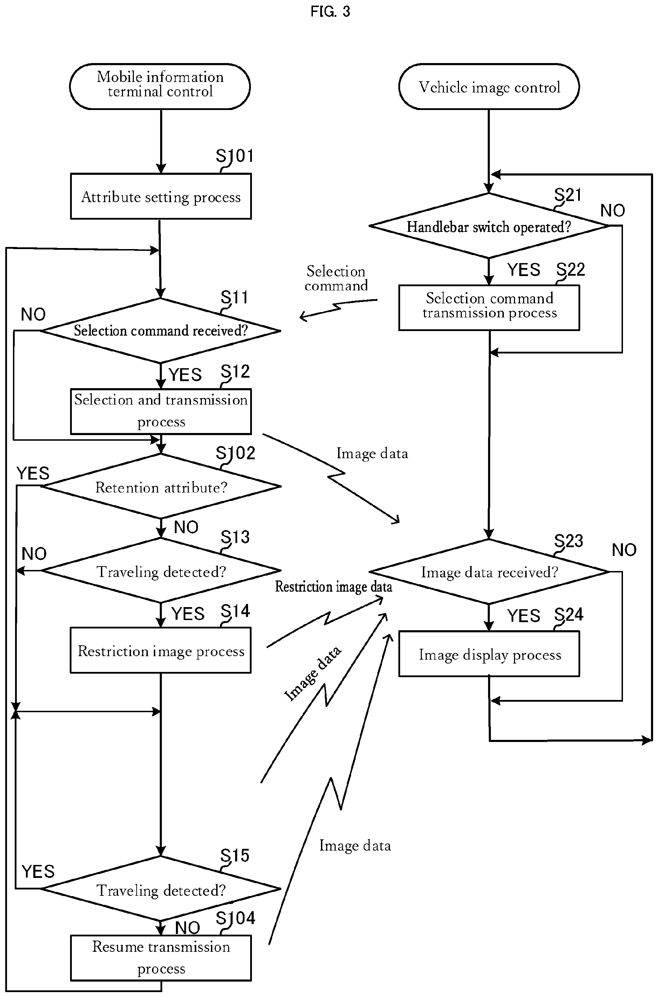

FIG. 3 is a flowchart illustrating an example of operation of the straddled vehicle system shown in FIG. 1 and FIG. 2.

With reference to FIG. 3, more details of the operation not included in the flowchart of FIG. 2 will be described. The same reference signs are given to the parts common to FIG. 2, and explanations may be omitted to avoid redundancy.

The terminal control device 22 in the mobile information terminal 2 may, for example, execute an attribute setting process (S101). In the attribute setting process, the terminal control device 22 sets a display retention attribute to a predetermined image for which the display state is kept, among images that can be displayed on the speed display unit 13.

The attributes of an image can be set by the terminal control device 22, for example, in response to an operation by the rider R on the terminal operation device 21.

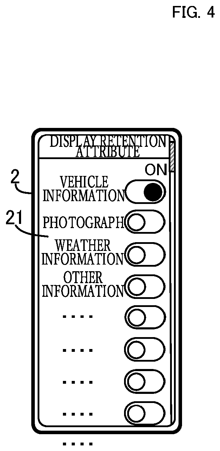

FIG. 4 is a diagram illustrating an example of a display screen of a mobile information terminal.

As shown in FIG. 4, the terminal control device 22 causes a list of images to be displayed on the terminal operation device 21, and sets attributes according to operations on parts of the terminal operation device 21 corresponding to display positions of the images.

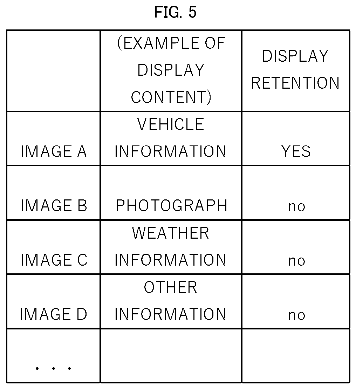

FIG. 5 is a table showing an example of images and attributes correspondingly set for the images.

In an example shown in FIG. 5, images A to D are shown as images that can be displayed on the speed display unit 13. For each image, an example of the display content and a display retention attribute are shown. For example, the image A for the vehicle information is set with the display retention attribute (YES). The vehicle information is, more specifically, vehicle maintenance information. The vehicle information is, for example, information indicating the timing for replacing parts according to the travel distance of the vehicle. The attribute is set according to the operation on the mobile information terminal 2 without complex operations on the handlebar switch 12, for example.

Note that the presence or absence of some attributes may be unique to the corresponding image and may not be changeable by operation on the terminal operation device 21.

Referring to FIG. 3, the explanation will continue.

When the terminal control device 22 receives the selection command (Yes at S11), the terminal control device 22 executes the selection and transmission process (S12). The terminal control device 22 transmits image data of the selected display image.

When the image data previously transmitted to the vehicle image control device 14 has a display retention attribute (Yes at S102), the terminal control device 22 omits transmission (S14) of the restriction image data of the restriction image Z.

When an image with the display retention attribute set (e.g., image A in FIG. 5) is being displayed, the terminal control device 22 does not transmit restriction image data of the restriction image Z even if traveling of the straddled vehicle 1 is detected. Therefore, even when the straddled vehicle 1 is in the traveling state, the display of the image A with the display retention attribute is maintained as is. By setting the display retention attribute to the image A, which is an image of information requiring an urgency level such that the information should not disappear due to traveling of the straddled vehicle 1, such as vehicle maintenance information, the restriction image Z is not displayed even when traveling starts while the image A is being displayed, and the display of the image A of the vehicle maintenance information is kept. As a result, the rider R can confirm that maintenance is necessary even in a traveling state, by the image displayed on the speed display unit 13.

Setting of exceptional conditions under which the display of the restriction image Z does not start even in the traveling state described above can be executed, for example, by an operation on the mobile information terminal 2 or by the application program 23 of the mobile information terminal 2. In other words, it is possible to change exceptions of the display of the restriction image Z while suppressing changes in functions or structures of the straddled vehicle 1, or suppressing complex operations on the handlebar switch 12.

The terminal control device 22 transmits restriction image data of the restriction image Z in response to detection of traveling of the straddled vehicle 1 (Yes at S13) (S14).

Setting of exceptional conditions of images that take precedence over the restriction image Z can be executed, for example, by an operation on the mobile information terminal 2 or by the application program 23 of the mobile information terminal 2. In other words, it is possible to change exceptions of the display of the restriction image Z while suppressing changes in functions or structures of the straddled vehicle 1, or suppressing complex operations on the handlebar switch 12.

When the terminal control device 22 detects the non-traveling state of the straddled vehicle 1 (No at S15), the terminal control device 22 may execute a resume transmission process (S104). Detection of the non-traveling state means that traveling is not detected. The terminal control device 22 transmits image data of the display image in the resume transmission process. The terminal control device 22 may, for example, retransmit the image data transmitted in the selection and transmission process (S12) before the restriction image data of the restriction image Z transmitted in response to detection of travel of the straddled vehicle 1.

The terminal control device 22 resumes selection of the display image when it receives a selection command based on the operation of the handlebar switch 12 from the vehicle image control device 14 (S11, S12).

When the straddled vehicle 1 is in a non-traveling state, the display of the restriction image Z is canceled, and selection and display of the display image become possible. By changing the displayed image from the restriction image Z, the rider R can be notified that selection and display of the display image are enabled. Regarding the conditions for canceling the display of the restriction image Z, it is possible to change exceptions of the display of the restriction image Z while suppressing changes in functions or structures of the straddled vehicle 1, or suppressing complex operations on the handlebar switch 12.

### List of Reference Signs

- 1:: straddled vehicle
- 2:: mobile information terminal
- 11:: vehicle body
- 11b:: handlebar
- 12:: handlebar switch
- 13:: speed display unit
- 14:: vehicle image control device
- 21:: terminal operation device
- 22:: terminal control device
- 23:: application program
- S:: straddled vehicle system

## Claims

1. A straddled vehicle system comprising a straddled vehicle and an application program operating on a mobile information terminal capable of communicating with the straddled vehicle,
the straddled vehicle comprising:
a vehicle body including a handlebar to be held by a hand of a rider of the straddled vehicle;
a handlebar switch attached to the handlebar;
a speed display unit attached to the vehicle body, which displays a traveling speed of the straddled vehicle and an image; and
a vehicle image control device having a function to communicate with the mobile information terminal and controlling the speed display unit,
the mobile information terminal comprising:
a terminal control device as a computer having a function to communicate with the vehicle image control device,
wherein the vehicle image control device
transmits, to the terminal control device, a selection command to cause the terminal control device to select one image as a display image from a plurality of images, in response to an operation on the handlebar switch by a hand of the rider while the rider holds the handlebar,
when image data is received from the terminal control device, causes the speed display unit to display an image of the image data thereon, and
wherein the application program, by being executed in the terminal control device,
causes the terminal control device to select the display image from the plurality of images and transmit the image data of the display image, when the selection command based on the operation on the handlebar switch is received from the vehicle image control device, and
causes the terminal control device to transmit, instead of the image data of the display image, restriction image data of a restriction image representing that a selection operation with respect to the handlebar switch is disabled, and to stop selection of the display image in response to reception of the selection command based on the operation on the handlebar switch, when traveling of the straddled vehicle is detected.

2. The straddled vehicle system according to claim 1, wherein
the application program, by being executed in the terminal control device,
causes the terminal control device to set, for a predetermined image among images displayable on the speed display unit, a display retention attribute to keep a display state, and
causes the terminal control device to omit transmission of the restriction image data of the restriction image, when the image data transmitted to the vehicle image control device has the display retention attribute.

3. The straddled vehicle system according to claim 1 or 2, wherein
the application program, by being executed in the terminal control device,
causes the terminal control device to
transmit the image data of the display image, when a non-traveling state of the straddled vehicle is detected, and
resume selection of the display image when the selection command based on the operation on the handlebar switch is received from the vehicle image control device.

4. A control method of controlling display in a vehicle image display device attached to a vehicle body of a straddled vehicle, by using a mobile information terminal having a terminal control device capable of communicating with the straddled vehicle, the method comprising:
transmitting, to the terminal control device, a selection command to cause the terminal control device to select one image as a display image from a plurality of images, in response to an operation on a handlebar switch by a hand of a rider while the rider holds a handlebar attached to the vehicle body;
selecting the display image from the plurality of images and transmitting image data of the display image, when the selection command based on the operation on the handlebar switch is received from a vehicle image control device;
when the image data is received from the terminal control device, causing a speed display unit to display an image of the image data thereon; and
transmitting, instead of the image data of the display image, restriction image data of a restriction image representing that a selection operation with respect to the handlebar switch is disabled, and stopping selection of the display image in response to reception of the selection command based on the operation on the handlebar switch, when traveling of the vehicle is detected.

5. A straddled vehicle system comprising a straddled vehicle and a mobile information terminal capable of communicating with the straddled vehicle,
the straddled vehicle comprising:
a vehicle body including a handlebar to be held by a hand of a rider of the straddled vehicle;
a handlebar switch attached to the handlebar;
a speed display unit attached to the vehicle body, which displays a traveling speed of the straddled vehicle and an image; and
a vehicle image control device having a function to communicate with the mobile information terminal and controlling the speed display unit,
the mobile information terminal comprising:
a terminal control device as a computer having a function to communicate with the vehicle image control device,
wherein the vehicle image control device
transmits, to the terminal control device, a selection command to cause the terminal control device to select one image as a display image from a plurality of images, in response to an operation on the handlebar switch by a hand of the rider while the rider holds the handlebar,
when image data is received from the terminal control device, causes the speed display unit to display an image of the image data thereon, and
the terminal control device, by executing an application program,
selects the display image from the plurality of images and transmits the image data of the display image, when the selection command based on the operation on the handlebar switch is received from the vehicle image control device; and
transmits, instead of the image data of the display image, restriction image data of a restriction image representing that a selection operation with respect to the handlebar switch is disabled, and stops selection of the display image in response to reception of the selection command based on the operation on the handlebar switch, when traveling of the straddled vehicle is detected.

6. The straddled vehicle system according to claim 5, wherein
the terminal control device
sets, for a predetermined image among images displayable on the speed display unit, a display retention attribute to keep a display state, and
omits transmission of the restriction image data of the restriction image, when the image data transmitted to the vehicle image control device has the display retention attribute.

7. The straddled vehicle system according to claim 5 or 6, wherein
the terminal control device transmits the image data of the display image, when a non-traveling state of the straddled vehicle is detected, and
resumes selection of the display image when the selection command based on the operation on the handlebar switch is received from the vehicle image control device.

8. An application program that controls the mobile information terminal included in the straddled vehicle system according to any one of claims 5 to 7, wherein
the application program, by being executed in the terminal control device,
causes the terminal control device to select the display image from the plurality of images and transmit the image data of the display image, when the selection command based on the operation on the handlebar switch is received from the vehicle image control device, and
causes the terminal control device to transmit, instead of the image data of the display image, restriction image data of a restriction image representing that a selection operation with respect to the handlebar switch is disabled, and to stop selection of the display image in response to reception of the selection command based on the operation on the handlebar switch, when traveling of the straddled vehicle is detected.
